# DEMANDE DE BREVET EUROPEEN

(11) **EP 3 663 019 A1**
(43) Date de publication de la demande: **10.06.2020**
(21) Numéro de dépôt: 18210947.0
(22) Date de dépôt: 07.12.2018
(51) Int. Cl.: B22F 1/00, B22F 3/00, B22F 3/105, B22F 3/15, B22F 9/04, C22C 1/04, C22C 1/05, C22C 5/00, C22C 5/02, C22C 5/04, C22C 5/06, C22C 32/00

(54) **PROCÉDÉ DE FABRICATION D'ALLIAGES DE MÉTAUX PRÉCIEUX ET ALLIAGES DE MÉTAUX PRÉCIEUX AINSI OBTENUS**

(71) Demandeur: The Swatch Group Research and Development Ltd, 2074 Marin (CH)
(72) Inventeur: MIKO, Csilla, 1417 Essertines-sur-Yverdon (CH); BAZIN, Jean-Luc, 2512 Tüscherz-Alfermée (CH); GROSJEAN, Rémi, 2503 Bienne (CH)
(74) Mandataire: ICB SA

(57) **Abrégé**

La présente invention concerne un procédé de fabrication d'une pièce par alliage d'un métal précieux avec du bore, ce procédé comprenant les étapes consistant à :
- se munir d'une quantité de métal précieux réduit à l'état de poudre ;
- se munir d'une quantité d'une poudre de bore micrométrique nano-structuré ;
- mélanger la poudre de métal précieux avec la poudre de bore micrométrique nano-structuré et compacter ce mélange de poudres par application d'une pression uni-axiale ;
- soumettre le mélange de poudre de métal précieux et de poudre de bore micrométrique nano-structuré à un traitement de frittage par plasma à étincelles (Spark Plasma Sintering ou flash sintering) sous une pression comprise entre 0,5 GPa et 10 GPa, ou bien à un traitement de compression isostatique à chaud (Hot Isostatic Pressing ou HIP) sous une pression comprise entre 80 bars et 2200 bars, le traitement étant effectué à une température comprise entre 400°C et 2100°C afin d'obtenir au moins un lingot d'un alliage de métal précieux et de bore, et
- usiner le lingot d'alliage de métal précieux et de bore afin d'obtenir la pièce recherchée, ou bien
- réduire le lingot d'alliage de métal précieux et de bore à l'état de poudre par un traitement de micronisation, et obtenir la pièce recherchée par traitement de la poudre résultant du traitement de micronisation.

L'invention concerne également un alliage d'or et de bore.

## Description

### Domaine technique de l'invention

La présente invention concerne un procédé de fabrication d'alliages de métaux précieux. La présente invention concerne également de tels alliages précieux. En particulier, la présente invention concerne un procédé de fabrication d'alliages légers de métaux précieux obtenus à partir d'or, d'argent, de platine, de palladium, de ruthénium ou d'iridium. Les alliages légers de métaux précieux dont il est question ici sont titrables, c'est-à-dire qu'il s'agit d'alliages dont le rapport entre la masse du métal précieux qui entre dans la composition de l'alliage et la masse totale de cet alliage est déterminé par la loi.

### Arrière-plan technologique de l'invention

Un alliage métallique résulte de la combinaison par fusion d'un premier élément métallique avec au moins un second élément métallique. L'intérêt des alliages métalliques réside dans le fait que les propriétés, notamment mécaniques, de tels alliages sont supérieures aux propriétés mécaniques des éléments métalliques considérés individuellement qui entrent dans leur composition.

Les propriétés mécaniques d'un métal peuvent notamment être améliorées par déformation, en particulier par écrouissage ; ces propriétés mécaniques peuvent aussi être améliorées par voie chimique, en ajoutant au métal de base un ou plusieurs éléments d'alliage. Ces ajouts permettent également souvent d'améliorer les propriétés chimiques telles que la résistance à la corrosion du métal de base.

La technique des alliages métalliques est particulièrement intéressante dans le cas des métaux précieux tels que l'or. En effet, l'or est connu pour se déformer facilement à froid, raison pour laquelle il a été utilisé dès la fin du néolithique pour réaliser des bijoux et des parures ainsi que des pièces de monnaie à partir de l'Antiquité. Néanmoins, la facilité avec laquelle l'or peut être déformé est également un inconvénient puisqu'un simple impact mécanique suffit à déformer le bijou réalisé à l'aide de ce métal noble. C'est pourquoi on a cherché très tôt à améliorer les propriétés mécaniques de l'or en l'alliant avec d'autres éléments métalliques ; l'argent et le cuivre sont les deux principaux métaux utilisés en alliage avec l'or et sont connus pour améliorer la rigidité de l'or.

L'alliage de l'or avec d'autres éléments métalliques tels que l'argent ou le cuivre conduit à des alliages métalliques dont la dureté est supérieure à celle de l'or. Néanmoins, ces alliages d'or ont comme inconvénient de présenter une masse volumique élevée. C'est pourquoi il a été tenté d'allier l'or avec des éléments métalliques de masse volumique plus faible.

Des essais ont déjà été effectués pour tenter d'allier l'or (Au) qui est un métal lourd, c'est-à-dire un métal dont la masse volumique est élevée (environ 19.3 g.cm⁻³), avec le bore (B) qui est un métal très léger, c'est-à-dire dont la masse volumique est faible (environ 2.3 g.cm⁻³). Néanmoins, les tentatives effectuées jusqu'à aujourd'hui pour tenter d'allier l'or et le bore à l'aide des techniques de métallurgie classiques se sont toutes soldées par des échecs ou, au mieux, ont abouti à des taux de dissolution du bore très faibles, ne permettant pas d'envisager une production industrielle. Les matériaux résultant de la combinaison de l'or et du bore se sont en effet révélés instables et il s'est avéré impossible de réaliser des composants massifs titrables tels que de l'or 18 carats à l'aide de cette combinaison. Ces problèmes s'expliquent notamment par le fait qu'au cours de la fusion, on ne parvient pas à mélanger l'or et le bore ; en effet, en raison de sa masse volumique élevée, l'or a tendance à sédimenter au fond du creuset, tandis que le bore dont la masse volumique est plus faible, surnage.

La récente mise sur le marché de poudres de bore obtenues par les techniques de nano-structuration a relancé l'intérêt pour les alliages d'or et de bore et, plus généralement, pour tout type d'alliage entre un métal précieux (or (Au), argent (Ag), platine (Pt), palladium (Pd), ruthénium (Rh) ou iridium (Ir)) et le bore (B).

Les procédés de fabrication d'alliages métalliques par la technologie de la métallurgie des poudres permettent d'obtenir des matériaux qui seraient impossibles à fabriquer à l'aide des techniques de métallurgie traditionnelles. Ceci est particulièrement intéressant dans le cas où le métal qui entre dans la composition d'un tel alliage métallique est un métal précieux titrable tel que l'or (Au), l'argent (Ag), le platine (Pt), le palladium (Pd), le ruthénium (Rh) ou l'iridium (Ir). En outre, les alliages métalliques obtenus par la technologie des poudres sont à la fois plus légers et plus durs que les alliages métalliques obtenus par les voies de la métallurgie classique.

Le bore nano-structuré se présente sous la forme d'une poudre de couleur grise/noire formée de particules dont les dimensions sont comprises entre 5 nm et 12 nm et qui sont formées d'un coeur constitué de HfB₂,de NiB, de CoB, de YB₄ ou de YB₆ et dont la structure est cristalline, et d'une couche de bore amorphe dont l'épaisseur est de quelques nanomètres et dans laquelle le coeur de ces particules est enrobé. Ces particules sont agglomérées entre elles pour former des structures tridimensionnelles dont les dimensions se trouvent dans la gamme micrométrique et dont la surface spécifique est de l'ordre de 700 m² pour 1g de poudre.

### Résumé de l'invention

La présente invention a pour but de procurer un procédé de fabrication d'alliages légers de métaux précieux permettant notamment d'obtenir des alliages légers stables d'un point de vue physicochimique à l'aide desquels il est possible de réaliser des composants massifs. La présente invention a également pour objet de tels alliages légers précieux.

A cet effet, la présente invention concerne un procédé de fabrication d'une pièce par alliage d'un métal précieux avec du bore, ce procédé comprenant les étapes consistant à :
- se munir d'au moins une quantité de métal précieux réduit à l'état de poudre ;
- se munir d'une quantité d'une poudre de bore micrométrique nano-structuré ;
- mélanger la poudre de métal précieux avec la poudre de bore micrométrique nano-structuré et compacter ce mélange de poudres par application d'une pression uni-axiale ;
- soumettre le mélange de poudre de métal précieux et de poudre de bore micrométrique nano-structuré à un traitement de frittage par plasma à étincelles (Spark Plasma Sintering ou flash sintering) sous une pression comprise entre 0,5 GPa et 10 GPa, ou bien à un traitement de compression isostatique à chaud (Hot Isostatic Pressing ou HIP) sous une pression comprise entre 80 bars et 2200 bars, le traitement étant effectué à une température comprise entre 400°C et 2100°C afin d'obtenir au moins un lingot d'un alliage de métal précieux et de bore, et
- usiner le lingot d'alliage de métal précieux et de bore afin d'obtenir la pièce recherchée, ou bien
- réduire le lingot d'alliage de métal précieux et de bore à l'état de poudre par un traitement de micronisation, et obtenir la pièce recherchée par traitement de la poudre résultant du traitement de micronisation.

Grâce à ces caractéristiques, le procédé selon l'invention permet d'obtenir des alliages de métal précieux et de bore qui présentent à la fois d'excellentes propriétés mécaniques et dont la masse volumique est faible. A la connaissance de la Demanderesse, le procédé selon l'invention offre, pour la première fois, la possibilité d'allier, à une échelle industrielle, un composant de masse volumique très faible, en l'occurrence le bore, avec un métal précieux, notamment mais non exclusivement l'or, dont la masse volumique est élevée. Grâce au procédé de l'invention, il est possible d'obtenir des alliages de métal précieux et de bore stables d'un point de vue physicochimique, présentant d'excellentes propriétés mécaniques, et dont la masse volumique est faible. De façon remarquable, dans le procédé selon l'invention, le métal précieux sélectionné et les particules de bore s'allient intimement, sans qu'à aucun moment un phénomène de ségrégation entre les deux matériaux ne puisse être observé.

Selon des formes spéciales d'exécution de l'invention :
- afin d'obtenir la pièce recherchée, la poudre résultant du traitement de micronisation est introduite dans un moule et soumise à une pression uni-axiale ou isostatique ;
- afin d'obtenir la pièce recherchée, la poudre résultant du traitement de micronisation est soumise à un traitement de fabrication additive tridimensionnelle ;
- le traitement de fabrication additive tridimensionnelle est du type impression directe ;
- le traitement par impression directe est choisi dans le groupe formé par le frittage laser (Selective Laser Melting ou SLM) et le frittage par bombardement d'électrons (E-beam melting) ;
- le traitement de fabrication additive tridimensionnelle est du type impression indirecte ;
- le traitement par impression indirecte est choisi dans le groupe formé par Inkjetting, nanoparticule jetting (NPJ) et Digital Light Projecting (DLP).

Selon une autre forme spéciale d'exécution de l'invention, le procédé de fabrication comprend en outre les étapes de :
- mélanger la poudre résultant du traitement de micronisation du lingot d'alliage de métal précieux et de bore avec un liant afin d'obtenir une charge d'alimentation (feedstock) ;
- réaliser une pièce verte (green body) en soumettant la charge d'alimentation à une injection ou micro-injection de fabrication additive ;
- obtenir une pièce brune (brown body) en soumettant la pièce verte à une étape d'élimination du liant polymérique appelée étape de déliantage au cours de laquelle la pièce verte est traitée chimiquement puis thermiquement dans un four pour brûler le liant polymérique résiduel, cette étape de déliantage s'effectuant typiquement en phase gazeuse dans une atmosphère d'acide nitrique ou d'acide oxalique et à une température comprise entre 100°C et 140°C ;
- soumettre la pièce brune à un traitement de frittage sous atmosphère protégée et à une température comprise entre 700°C et 1800°C afin d'obtenir la pièce recherchée.

Selon une autre forme spéciale d'exécution de l'invention, le procédé de fabrication comprend en outre les étapes consistant à :
- mélanger la poudre résultant du traitement de micronisation du lingot d'alliage de métal précieux et de bore avec un liant afin d'obtenir une charge d'alimentation (feedstock) ;
réaliser une pièce verte (green body) dont la forme correspond au profil de la pièce recherchée en utilisant une technique de fabrication additive indirecte ;
- obtenir une pièce brune (brown body) en soumettant la pièce verte à une étape d'élimination du liant polymérique appelée étape de déliantage au cours de laquelle la pièce verte est traitée chimiquement puis thermiquement dans un four pour brûler le liant polymérique résiduel, cette étape de déliantage s'effectuant typiquement en phase gazeuse dans une atmosphère d'acide nitrique ou d'acide oxalique et à une température comprise entre 100°C et 140°C ;
- soumettre la pièce brune à un traitement de frittage sous atmosphère protégée et à une température comprise entre 700°C et 1800°C afin d'obtenir la pièce recherchée.

Selon d'autres formes spéciales d'exécution de l'invention :
- la technique de fabrication additive est choisie dans le groupe formé par Binder jetting, Solvent on Granulate jetting, FDM ou micro-extrusion ;
- après le traitement de frittage, on soumet la pièce issue de l'étape de frittage à une étape de post-traitement par compression isostatique à chaud (Hot Isostatic Pressing ou HIP) sous une pression comprise entre 500 bars et 2200 bars, et à une température comprise entre 600°C et 2100°C ;
- le liant est choisi dans le groupe formé par le polyéthylène glycol (PEG), le cellulose acétate butyrate (CAB), le nano-cellulose, l'amidon de maïs, le sucre, l'acide polylactique (Polylactic Acid ou PLA), le polyéthylène, le polypropylène, la cire synthétique ou naturelle et l'acide stéarique ;
- le métal précieux est choisi dans le groupe formé par l'or (Au), l'argent (Ag), le platine (Pt), le palladium (Pd), le ruthénium (Rh) et l'iridium (Ir), et le bore micrométrique nano-structuré est choisi dans le groupe formé par le NiB, le CoB, le YB₄ et le YB₆ ;
- on mélange 25% en poids de bore micrométrique nano-structuré avec 75% en poids d'or ;
- le bore nano-structuré se présente sous la forme d'une poudre formée de particules dont les dimensions sont comprises entre 5 nm et 12 nm et qui sont formées d'un coeur constitué de HfB₂ dont la structure est cristalline, et d'une couche de bore amorphe dont l'épaisseur est de quelques nanomètres et dans laquelle le coeur de ces particules est enrobé, ces particules étant agglomérées entre elles pour former des structures tridimensionnelles dont les dimensions se trouvent dans la gamme micrométrique ;
- la surface spécifique des particules de bore nano-structurées est de l'ordre de 700 m² pour 1g de poudre ;
- le bore micrométrique nano-structuré est obtenu par synthèse dans du sel fondu, technique mieux connue sous sa dénomination anglo-saxonne Synthesis by Molten Salt ou SMS, cette synthèse étant effectuée par voie sèche, par voie humide ou sous atmosphère d'argon ;
- l'alliage d'or et de bore conformément au procédé de l'invention permet d'obtenir un or 18 carats avec une masse volumique comprise entre 6.6 et 7 g/cm³.

### Description détaillée d'un mode de mise en oeuvre de l'invention

La présente invention procède de l'idée générale inventive qui consiste à procurer un alliage d'un métal précieux titrable stable d'un point de vue physicochimique et qui présente d'excellentes propriétés mécaniques.

A cet effet, la présente invention a pour objet un procédé de fabrication d'une pièce par alliage d'un métal précieux avec du bore, ce procédé comprenant les étapes consistant à :
- se munir d'au moins une quantité de métal précieux réduit à l'état de poudre ;
- se munir d'une quantité d'une poudre de bore micrométrique nano-structuré ;
- mélanger la poudre de métal précieux avec la poudre de bore micrométrique nano-structuré et compacter ce mélange de poudres par application d'une pression uni-axiale ;
- soumettre le mélange de poudre de métal précieux et de poudre de bore micrométrique nano-structuré à un traitement de frittage par plasma à étincelles (Spark Plasma Sintering ou flash sintering) sous une pression comprise entre 0,5 GPa et 10 GPa, ou bien à un traitement de compression isostatique à chaud (Hot Isostatic Pressing ou HIP) sous une pression comprise entre 80 bars et 2200 bars, le traitement étant effectué à une température comprise entre 400°C et 2100°C afin d'obtenir au moins un lingot d'un alliage de métal précieux et de bore, et
- usiner le lingot d'alliage de métal précieux et de bore afin d'obtenir la pièce recherchée, ou bien
- réduire le lingot d'alliage de métal précieux et de bore à l'état de poudre par un traitement de micronisation, et obtenir la pièce recherchée par traitement de la poudre résultant du traitement de micronisation.

Une fois que l'on a micronisé le lingot d'alliage de métal précieux et de bore obtenu par la mise en oeuvre du procédé selon l'invention, une première possibilité pour obtenir la pièce massive recherchée consiste à introduire la poudre résultant du traitement de micronisation dans un moule et à soumettre ce moule à une pression uni-axiale ou isostatique.

Une fois que l'on a micronisé le lingot d'alliage de métal précieux et de bore obtenu par la mise en oeuvre du procédé selon l'invention, une deuxième possibilité pour obtenir la pièce massive recherchée consiste à soumettre la poudre résultant du traitement de micronisation à un traitement de fabrication additive tridimensionnelle.

Le traitement de fabrication additive tridimensionnelle peut être du type à impression directe. Les techniques de fabrication additives tridimensionnelles du type direct disponibles sont le frittage laser, encore connu sous sa dénomination anglo-saxonne Selective Laser Melting ou SLM et le frittage par bombardement d'électrons également connu sous sa dénomination anglo-saxonne E-beam melting.

Le traitement de fabrication additive tridimensionnelle peut être du type à impression indirecte. Les techniques de fabrication additives tridimensionnelles du type indirect disponibles sont :
- impression par jet d'encre (Inkjetting) : la poudre résultant du traitement de micronisation du lingot d'alliage de métal précieux et de bore est dispersée dans l'encre. L'encre est imprimée couche après couche, chaque couche étant durcie par exposition au rayonnement d'une source de lumière par exemple UV avant dépôt de la couche suivante.
- nanoparticule jetting (NPJ) : cette technique, notamment développée par la société XJet, est semblable à l'impression par jet d'encre liquide, à la différence près que l'encre est composée de nanoparticules en suspension résultant du traitement de micronisation. La suspension est ensuite projetée, puis séchée couche par couche.
- Digital Light Projecting (DLP) : cette technique consiste à projeter par réflexion sur un miroir l'image de la pièce que l'on souhaite structurer sur un lit de poudre contenant les particules de poudre résultant du traitement de micronisation dispersées dans un photopolymère.

Selon une autre forme spéciale d'exécution de l'invention, après avoir mélangé la poudre résultant du traitement de micronisation du lingot d'alliage de métal précieux et de bore avec un liant afin d'obtenir une charge d'alimentation (feedstock), on réalise une pièce verte (green body) dont la forme correspond au profil de la pièce recherchée en soumettant la charge d'alimentation soit à une injection ou micro-injection, soit à une technique de fabrication additive.

Parmi les techniques de fabrication additive indirectes disponibles, on peut citer :
- Binder jetting :cette technique consiste à projeter un jet d'encre contenant un solvant et un liant sur un lit de poudre dans lequel sont dispersées les particules de poudre résultant du traitement de micronisation dispersées.
- Solvent on Granulate jetting : cette technique consiste à projeter un solvant sur un lit de granulats, chacun de ces granulats étant formé d'une pluralité de particules de poudre résultant du traitement de micronisation agglomérées entre elles au moyen d'un liant. Les dimensions de ces granulats sont de l'ordre de 10 µm à 50 µm. La pièce recherchée est imprimée couche par couche, les granulats s'agglomérant grâce au liant. Une fois la pièce recherchée imprimée, on la soumet à une opération de déliantage afin d'éliminer le solvant, puis elle est frittée.
- FFD (Fused Filament Deposition) : des filaments dont les dimensions sont dans le domaine du millimètre sont réalisés en agglomérant les particules de poudre résultant du traitement de micronisation au moyen d'un liant. Ces filaments sont ensuite chauffés et la matière dont ils sont faits s'échappent d'une buse dont le diamètre est de l'ordre de 40 µm et permettent d'imprimer la pièce recherchée en trois dimensions.
- micro-extrusion.

Quant au liant, il est choisi dans le groupe formé par le polyéthylène glycol (PEG), le cellulose acétate butyrate (CAB), le nano-cellulose (dérivé nanométrique du cellulose), l'amidon de maïs, le sucre, l'acide polylactique (Polylactic Acid ou PLA), le polyéthylène, le polypropylène, la cire synthétique ou naturelle et l'acide stéarique.

Une pièce brune (brown body) est obtenue en soumettant la pièce verte à une étape d'élimination du liant polymérique appelée étape de déliantage au cours de laquelle la pièce verte est traitée chimiquement puis thermiquement dans un four pour brûler le liant polymérique résiduel, cette étape de déliantage s'effectuant typiquement en phase gazeuse dans une atmosphère d'acide nitrique ou d'acide oxalique et à une température comprise entre 100°C et 140°C.

Finalement, la pièce brune est soumise à un traitement de frittage sous atmosphère protégée et à une température comprise entre 700°C et 1800°C afin d'obtenir la pièce recherchée.

On notera qu'il est possible, après le traitement de frittage, de soumettre la pièce issue de l'étape de frittage à une étape de post-traitement par compression isostatique à chaud (Hot Isostatic Pressing ou HIP) sous une pression comprise entre 500 bars et 2200 bars, et à une température comprise entre 600°C et 2100°C.

Conformément à des formes particulières d'exécution de l'invention, le métal précieux est choisi dans le groupe formé par l'or (Au), l'argent (Ag), le platine (Pt), le palladium (Pd), le ruthénium (Rh) et l'iridium (Ir). Quant au bore micrométrique nano-structuré, il s'agit de NiB, de CoB, de YB₄ ou de YB₆. Ce bore nano-structuré se présente sous la forme d'une poudre formée de particules dont les dimensions sont comprises entre 5 nm et 12 nm et qui sont formées d'un coeur constitué de bore dont la structure est cristalline, et d'une couche de bore amorphe dont l'épaisseur est de quelques nanomètres et dans laquelle le coeur de ces particules est enrobé, ces particules étant agglomérées entre elles pour former des structures tridimensionnelles dont les dimensions se trouvent dans la gamme micrométrique. La surface spécifique des particules de bore nano-structurées est de l'ordre de 700 m² pour 1g de poudre. Pour obtenir le matériau recherché, un rapport qui donne de bons résultats pour le mélange d'or et de bore est de 25% en poids de bore micrométrique nano-structuré et de 75% en poids d'or.

En particulier, la présente invention concerne un procédé de fabrication d'alliages légers de métaux précieux obtenus à partir d'or, d'argent, de platine, de palladium, de ruthénium ou d'iridium. Les alliages légers de métaux précieux dont il est question ici sont titrables, c'est-à-dire qu'il s'agit d'alliages dont le rapport entre la masse du métal précieux qui entre dans la composition de l'alliage et la masse totale de cet alliage est déterminé par la loi. Un alliage de métal précieux remarquable obtenu grâce au procédé de l'invention est un alliage d'or et de bore 18 carats avec une masse volumique comprise entre 6.6 et 7 g/cm³.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées.

On notera en particulier qu'il a été décidé de qualifier la poudre de bore dont il est question ici de « micrométrique » et de « nano-structurée » dans la mesure où les agrégats de particules de bore qui constituent cette poudre présentent des dimensions dans le domaine du micromètre, ces agrégats étant eux-mêmes constitués de particules qui présentent une structure cristalline dans la gamme du nanomètre.

On notera également que, bien que la présente description se soit essentiellement intéressée à un alliage de métal précieux binaire formé d'or et de bore, la présente invention n'est pas limitée à un tel exemple et couvre également des alliages de métaux précieux par exemple ternaires ou quaternaires. A titre d'exemple, conformément à l'invention, il est possible de mélanger des particules de poudre de bore micrométriques nano-structurées avec de l'or dans des pourcentages en poids respectifs 75% et 23%, le solde étant constitué par du nickel micronisé.

On notera également que l'or utilisé dans le cadre de la présente invention est de l'or ½ jaune vif 24 carats et que les dimensions des particules obtenues par battage de cet or et qui forment la poudre d'or utilisée dans le cadre de la présente invention sont inférieures à 50 µm.

On notera également que les particules de bore micrométriques nano-structurées dont il est question ici sont notamment connues de la thèse au nom de Remi Grosjean, intitulée « Boron-based nanomaterials under extreme conditions », pages 70 et suivantes, présentée publiquement le 19 octobre 2018 à l'Université Pierre et Marie Curie - Paris VI, 2016. Cette thèse est accessible sur le réseau internet à l'adresse suivante : https://tel.archives-ouvertes.fr/tel-01898865 (HAL Id: tel-01898865). Ces particules de bore micrométriques nano-structurées sont obtenues par synthèse dans des sels fondus, également connue sous sa dénomination anglo-saxonne Synthesis in Molten Salts ou SMS. Cette synthèse consiste à mettre en présence des substances réactives de métal et de bore dans un mélange de sels. Lorsque l'on chauffe le mélange, les sels fondent, agissant par conséquent à la façon d'un milieu liquide. La synthèse typique de borures nano-structurés dans des sels fondus met en oeuvre une source de métal (habituellement a chlorure MClₓ), et de l'hydroborure de sodium. L'hydroborure de sodium est utilisé à la fois comme une source de bore et comme un réducteur, de façon à obtenir M⁰ dans le milieu réactif. L'utilisation de tels précurseurs et de sels de lithium et de potassium nécessite de devoir travailler sous atmosphère inerte, en raison de la sensibilité de ces produits chimiques à l'eau et/ou à l'oxygène. Par conséquent, les précurseurs sont manipulés et mélangés dans une boîte à gants de laboratoire sous atmosphère inerte d'argon. La synthèse proprement dite est menée sous atmosphère d'argon et non d'azote, étant donné que l'argon est susceptible de réagir avec certaines espèces de bore et de conduire à la formation de nitrure de bore.

Les conditions requises pour la mise en oeuvre expérimentale sont donc les suivantes :
- veiller à ce que le milieu réactif reste sous atmosphère d'argon ; cet objectif est atteint en utilisant un tube de quartz qui est stable aux températures de travail et qui est relié à une ligne Schlenk.
- chauffer dans une plage de température compris entre 300°C et 1000°C. La zone du tube de quartz dans laquelle la température est homogène a une étendue d'environ 8 cm, c'est-à-dire suffisamment grande pour permettre un chauffage homogène du milieu réactif, et suffisamment limitée pour permettre la condensation des vapeurs de sels pour éviter la perte des solvants durant la réaction. La rampe de chauffage est de 10°C/min.
- éviter des réactions parasites entre le milieu réactif et le tube de quartz. Le carbone vitreux est chimiquement inerte dans une atmosphère d'argon et est par conséquent utilisé comme creuset. Le creuset est suffisamment étendu pour permettre la condensation des vapeurs de sels dans la zone de basse température du four.
- dans certains cas, il est nécessaire d'agiter le mélange réactif. Ceci est fait à l'aide d'une tige de carbone vitreux rotative.

Après la réaction, on laisse le milieu réactif refroidir naturellement. On obtient des borures de métal sous la forme de nanoparticules dispersées dans un volume de sels figés. Pour éliminer les sels, on effectue des cycles de lavage/centrifugation dans un solvant polaire tel que de l'eau ou du méthanol. Parmi les paramètres ajustables, on note la température de synthèse, le temps d'arrêt et le rapport initial entre les sources de métal et de bore.

La thèse mentionnée ci-dessus s'est particulièrement intéressé à deux borures de métal nano-structurés : le diborure de hafnium et l'hexaborure de calcium. CaB6 et HfB2 ne présentent pas de transition de phase sous haute température et pression élevée et sont donc bien adaptés pour étudier la cristallisation de la phase amorphe dans laquelle sont noyées les particules de borure.

Deux mélanges de sels eutectiques, à savoir LiCl/KCl et Lil/Kl, ont été utilisés. La première synthèse de HfB2 a été effectuée dans un mélange eutectique LiCl/KCl (45/55 en pourcentage massique) dont la température de fusion est de l'ordre de 350°C. HfCl4 et NaBH4 sont utilisés dans un rapport molaire Hf :B = 1 :4 et sont mélangés avec la solution de sels. Après chauffage à 900°C pendant 4 heures, refroidissement, lavage avec de l'eau désionisée et séchage sous vide, on obtient une poudre noire. Le réseau de diffraction des rayons X de cette poudre montre que HfB2 est la seule phase cristalline et ne présente aucune réflexion correspondant soit aux sels solvants ou au chlorure de sodium qui peuvent apparaître comme sous-produits de la formation de borure. Par ailleurs, la structure de HfB2 est typique de celle des diborures avec des atomes métalliques intercalés entre des feuilles de bore qui présentent une structure en nid d'abeilles.

Selon la formule de Scherrer, la taille des particules est de 7.5 nm. Ceci est confirmé par une étude par microscopie électronique par transmission qui montre que la taille des particules est comprise dans la gamme 5-12 nm. D'autres images obtenues par SAED, FFT et HRTEM confirment que HfB2 est l'unique phase cristalline dans le matériau et que seules les nanoparticules sont cristallines.

La microscopie électronique par transmission montre également que les particules sont entourées d'une écorce amorphe dont l'épaisseur est comprise entre 2 et 4 nm. Les particules se présentent comme des inclusions dans une matrice amorphe tridimensionnelle. Les espaces entre les particules sont remplis par une matrice amorphe dont l'épaisseur est comprise entre 2 et 4 nm. Par conséquent, la matrice est également nanostructurée et le matériau peut être décrit comme un nanocomposite.

## Revendications

1. Procédé de fabrication d'une pièce par alliage d'un métal précieux avec du bore, ce procédé comprenant les étapes consistant à :
- se munir d'au moins une quantité de métal précieux réduit à l'état de poudre ;
- se munir d'une quantité d'une poudre de bore micrométrique nano-structuré ;
- mélanger la poudre de métal précieux avec la poudre de bore micrométrique nano-structuré et compacter ce mélange de poudres par application d'une pression uni-axiale ;
- soumettre le mélange de poudre de métal précieux et de poudre de bore micrométrique nano-structuré à un traitement de frittage par plasma à étincelles (Spark Plasma Sintering ou flash sintering) sous une pression comprise entre 0,5 GPa et 10 GPa, ou bien à un traitement de compression isostatique à chaud (Hot Isostatic Pressing ou HIP) sous une pression comprise entre 80 bars et 2200 bars, le traitement étant effectué à une température comprise entre 400°C et 2100°C afin d'obtenir au moins un lingot d'un alliage de métal précieux et de bore, et
- usiner le lingot d'alliage de métal précieux et de bore afin d'obtenir la pièce recherchée, ou bien
- réduire le lingot d'alliage de métal précieux et de bore à l'état de poudre par un traitement de micronisation, et obtenir la pièce recherchée par traitement de la poudre résultant du traitement de micronisation.

2. Procédé de fabrication selon la revendication 1, **caractérisé en ce que**, afin d'obtenir la pièce recherchée, la poudre résultant du traitement de micronisation est introduite dans un moule et soumise à une pression uni-axiale ou isostatique.

3. Procédé de fabrication selon la revendication 1, **caractérisé en ce que**, afin de réaliser la pièce recherchée, on soumet la poudre résultant du traitement de micronisation à un traitement de fabrication additive tridimensionnelle.

4. Procédé de fabrication selon la revendication 3, **caractérisé en ce que** le traitement de fabrication additive tridimensionnelle est du type impression directe.

5. Procédé de fabrication selon la revendication 4, **caractérisé en ce que** le traitement par impression directe est choisi dans le groupe formé par le frittage laser (Selective Laser Melting ou SLM) et le frittage par bombardement d'électrons (E-beam melting).

6. Procédé de fabrication selon la revendication 3, **caractérisé en ce que** le traitement de fabrication additive tridimensionnelle est du type impression indirecte.

7. Procédé de fabrication selon la revendication 6, **caractérisé en ce que** le traitement par impression indirecte est choisi dans le groupe formé par Inkjetting, nanoparticule jetting (NPJ) et Digital Light Projecting (DLP).

8. Procédé de fabrication selon la revendication 1, **caractérisé en ce qu'**il comprend en outre les étapes de :
- mélanger la poudre résultant du traitement de micronisation du lingot d'alliage de métal précieux et de bore avec un liant afin d'obtenir une charge d'alimentation (feedstock) ;
- réaliser une pièce verte (green body) dont la forme correspond au profil de la pièce recherchée en soumettant la charge d'alimentation soit à une injection ou micro-injection, soit à une technique de fabrication additive ;
- obtenir une pièce brune (brown body) en soumettant la pièce verte à une étape d'élimination du liant polymérique appelée étape de déliantage au cours de laquelle la pièce verte est traitée chimiquement puis thermiquement dans un four pour brûler le liant polymérique résiduel, cette étape de déliantage s'effectuant en phase gazeuse dans une atmosphère d'acide nitrique ou d'acide oxalique et à une température comprise entre 100°C et 140°C ;
- soumettre la pièce brune à un traitement de frittage sous atmosphère protégée et à une température comprise entre 700°C et 1800°C afin d'obtenir la pièce recherchée.

9. Procédé de fabrication selon la revendication 8, **caractérisé en ce que** la technique de fabrication additive est choisie dans le groupe formé par Binder jetting, Solvent on Granulate jetting, FDM ou micro-extrusion.

10. Procédé de fabrication selon l'une des revendications 8 et 9, **caractérisé en ce que**, après le traitement de frittage, on soumet la pièce issue de l'étape de frittage à une étape de post-traitement par compression isostatique à chaud (Hot Isostatic Pressing ou HIP) sous une pression comprise entre 500 bars et 2200 bars, et à une température comprise entre 600°C et 2100°C.

11. Procédé de fabrication selon l'une des revendications 8 à 10, **caractérisé en ce que** le liant est choisi dans le groupe formé par le polyéthylène glycol (PEG), le cellulose acétate butyrate (CAB), le nano-cellulose, l'amidon de maïs, le sucre, l'acide polylactique, le polyéthylène, le polypropylène, la cire synthétique ou naturelle et l'acide stéarique.

12. Procédé de fabrication selon l'une des revendications 1 à 11, **caractérisé en ce que** le métal précieux est choisi dans le groupe formé par l'or (Au), l'argent (Ag), le platine (Pt), le palladium (Pd), le ruthénium (Rh) et l'iridium (Ir), et **en ce que** le bore micrométrique nano-structuré est choisi dans le groupe formé par NiB, CoB, YB₄ et YB₆.

13. Procédé de fabrication selon la revendication 12, **caractérisé en ce que** l'on mélange 25% en poids de bore micrométrique nano-structuré avec 75% en poids d'or.

14. Procédé de fabrication selon l'une des revendications 12 et 13, **caractérisé en ce que** le bore nano-structuré se présente sous la forme d'une poudre formée de particules dont les dimensions sont comprises entre 5 nm et 12 nm et qui sont formées d'un coeur constitué de HfB₂ dont la structure est cristalline, et d'une couche de bore amorphe dont l'épaisseur est de quelques nanomètres et dans laquelle le coeur de ces particules est enrobé, ces particules étant agglomérées entre elles pour former des structures tridimensionnelles dont les dimensions se trouvent dans la gamme micrométrique.

15. Procédé de fabrication selon la revendication 14, **caractérisé en ce que** la surface spécifique des particules de bore nano-structurées est de l'ordre de 700 m² pour 1g de poudre.

16. Procédé de fabrication selon l'une des revendications 12 à 15, **caractérisé en ce que** l'or que l'on utilise est de l'or ½ jaune vif 24 carats et que les dimensions des particules d'or sont inférieures à 50 µm.

17. Alliage d'or et de bore.

18. Alliage selon la revendication 17, **caractérisé en ce qu'**il s'agit d'or 18 carats.

19. Alliage selon l'une des revendications 17 et 18, **caractérisé en ce qu'**il contient d'autres éléments alliés.

20. Alliage selon l'une des revendications 17 à 19, **caractérisé en ce qu'**il présente une masse volumique comprise entre 6.6 et 7 g/cm³.
